# EUROPEAN PATENT SPECIFICATION

(11) **EP 1 852 006 B1**
(45) Date of publication and mention of the grant of the patent: **11.11.2009**
(21) Application number: 07075330.6
(22) Date of filing: 02.05.2007
(51) Int. Cl.: A01B 45/02

(54) **Aerating device**
Belüftungseinrichtung
Dispositif d'aération

(30) Priority: 04.05.2006 NL 1031747
(43) Date of publication of application: 07.11.2007
(73) Proprietor: Redexim Handel-en Exploitatie Maatschappij B.V., 3702 AC Zeist (NL)
(72) Inventor: De Bree, Cornelis Hermanus Maria, 3971 ND Driebergen (NL)
(74) Representative: Prins, Hendrik Willem

(56) References cited:
- EP-A- 1 203 522
- DE-U1- 20 015 504
- US-A- 4 602 687

## Description

The present invention relates to an aerating device for aerating a ground according to the preamble of claim 1 (see e.g. DE 200 15 504 U1).

An aerating device is known and comprises for instance a frame which is provided with moving means for travel of this device over the ground. The device preferably comprises a crankshaft which is bearing-mounted on the frame and which can be coupled to a drive. An aerating device can further comprise a number of aerating means connected to the frame and connected to the crankshaft. The aerating means, preferably each of them, preferably comprises a pin which is adapted to perform a repetitive movement in a situation of use, wherein the pin is inserted into the ground. The ground is hereby aerated. The movement is preferably guided by at least two pivoting arms of the aerating means. It is recommended here that a number of first arms of the aerating means have a pivot point which is displaceable and fixable relative to the frame.

Such an aerating device is known. The arms of the aerating means are suspended in the frame and therein form a parallelogram construction. The first arm is for instance an extendable arm, for instance a telescopic arm. The arm can be extended, for instance in that the two parts of the arm are biased by means of a draw spring. The telescopic arm has a variable length and the spring-mounting of the arm serves as shock absorber. The second arm is for instance connected to the crankshaft and, when the crankshaft is driven in the situation of use, the second arm is guided in a repetitive movement, whereby the pin holder connected to the first and second arm guides the pins in the repetitive movement, wherein the pins are inserted into the ground. The first and second arm pivot relative to the frame. The pivot points are located substantially one above the other. The first and second arm are roughly the same length in a rest position.

It is known that the pivot point of the first extendable arm is displaceable and fixable relative to the frame. An angular adjustment of the pin holder and the pin can hereby be obtained for insertion of the pins into the ground. The pivot point can be displaced with an adjusting means and then fixed. The arm then has a displaced pivot point.

A problem of the known devices is that the adjusting means for enabling displacement and fixing of the pivot point of the first arm wear rapidly due to the great forces exerted on the adjusting means. The object of the invention is to provide an aerating device wherein the displacement and fixing is embodied more robustly compared to the prior artand to provide a device wherein it becomes possible to perform the angular adjustment for a number of aerating means in one controllable step.

The object of the invention is achieved in that the pivot points of a number of first arms are coupled via a bush to a shared shaft which is connected to the frame, and wherein this shaft has at least one eccentric coupling wherein the possible positions of the pivot points with respect to the shared shaft lie on a circle around said shaft. Because one shared shaft is used as suspension for the pivot points of the first arm, a more robust device is obtained which can withstand the great forces occurring during the aeration. Through use of the shaft it is possible to apply at least one eccentric coupling, wherein this eccentric coupling is used for movable suspension of the pivot point of the first arms relative to the frame. The adjustability of the pivot point of the arm is limited to the positions which are made possible by the eccentricity of or relative to the shaft. The possible positions lie on a circle around the shaft. The limiting of the possible adjustable locations for the pivot point results in a considerable increase the robustness and wear-resistance of the device, while on the other hand the most diverse angular adjustments of the pin and pin holder relative to the frame and the ground remain possible due to the eccentric adjustment. The eccentric adjustability allows movement of the pivot points relative to the frame in both a vertical direction and in a horizontal direction.

The increased robustness is acquired because the shaft can for instance be bearing mounted in known manner.

The eccentric coupling according to the invention relates either to the coupling suspension of the shared shaft on the frame or the coupling of the bush of the first arm to the shaft, or a combination thereof.

According to a first embodiment, the shaft is coupled eccentrically to the frame. The shaft itself can hereby be moved eccentrically relative to the frame, and rotation of the shaft will result in displacement of the pivot point of the arm in that the bush via which the arm is coupled to the shaft follows the eccentric movement of the shaft. The pivot points of a number of first arms, and therefore the insertion angle of the pins of these respective aerating means, are modified and adjusted by rotating the shaft, for instance with a spindle. Using the spindle the pivot point can be displaced and then fixed during the situation of use.

In the preferred embodiment the bush is coupled eccentrically to the shared shaft. Because the bush is eccentric, the arm is coupled eccentrically to the shaft and the pivot point of the first arm is eccentric relative to the shaft. Rotation of the shaft can result in displacement of the pivot point. The adjustability of the aerating means is obtained by displacing the pivot point relative to the shaft. Rotation can take place with an adjusting means, for instance a spindle.

In a preferred embodiment the shaft has a non-round cross-section and the bush is provided with a corresponding, non-round, eccentrically placed opening. The shaft is for instance a profiled shaft. Due to the non-round cross-section the shaft is coupled non-rotatably to the bush and the bush is co-rotated with the shaft. The shaft itself is coupled rotatably to the frame, and this coupling is preferably not eccentric. The shaft can be rotated relative to the frame, for instance with a spindle or a handle, and the pivot point of the first arm, which lies in the centre of the bush, will be displaced eccentrically relative to this shared shaft by this rotation, which is transferred integrally to the bush, whereby the angular adjustment of the pins is obtained.

According to another embodiment, the shaft is connected rotatably to the frame and the bush is connected eccentrically to this shaft, for instance in that the shaft is embodied as a crankshaft. Due to the eccentric coupling of the bush to the crankshaft the bush can be displaced eccentrically relative to the shaft, whereby the pivot point is displaceable with the same eccentric movement relative to the shaft and, by fixing the shaft in a determined position, the pivot point can be fixed at this location.

According to yet another embodiment, the bush of the first arm is coupled eccentrically in each case to a shared shaft which is connected to the frame. The shaft is fixedly connected to the frame. The bush can be rotated eccentrically due to the eccentric coupling to the shaft. The rotation of the bush relative to the shaft can be performed with an eccentric lever connected to the frame via a coupling device. The coupling device according to the preferred embodiment preferably comprises a spindle. The different first arms of the respective aerating means can be coupled in each case via the eccentric lever with its own spindle to an adjusting mechanism. The adjusting mechanism can comprise a handle and a fixed shaft. By turning the handle around the fixed shaft a displacement of the spindle is obtained which causes the eccentric lever to displace the bush relative to the fixed shaft. An individual adjustment of the respective aerating means is possible through adjustment of the spindle which couples the adjusting device to the eccentric lever.

Although the invention will be described on the basis of a number of preferred embodiments, the invention is not limited thereto. It will be apparent to the skilled person that different embodiments are possible within the scope of the invention as defined in the appended claims, wherein the adjustability of the pivot point of the first arm is guided by an eccentric adjustment, and wherein this eccentric adjustment is made possible via a shaft coupled to the frame. The invention shows a number of features which are shown in the various embodiments but, as will be apparent to the skilled person, the different elements can be combined with each other. The description of the different embodiments is not limited to the combination of the stated embodiment, but the different elements of the embodiments can be combined with each other. It will also be apparent to the skilled person that it is possible to file divisional applications relating to elements or combinations of elements as stated in the description or shown in the figures, or combinations of elements as shown in different embodiments.

The invention will be further described on the basis of a number of preferred embodiment which are shown in the figures, wherein:
- Figure 1: is a perspective view of an aerating device,
- Figure 2: is a perspective view of a number of aerating means of an aerating device according to a first embodiment of the invention,
- Figure 3: shows a detail according to III of the first embodiment,
- Figure 4: is a cross-sectional view of an aerating device according to a first embodiment of the invention,
- Figure 5: is a perspective view of a second embodiment of the invention,
- Figure 6: is a detail according to VI of the second embodiment,
- Figure 7: is a cut-away view of the second embodiment of the invention,
- Figure 8: is a schematic cross-section of the second embodiment of the invention,
- Figure 9: is a perspective view of a third embodiment of the invention,
- Figure 10: is a detail according to X of the third embodiment,
- Figure 11: is a schematic view of a cross-section of the third embodiment,
- Figure 12: is a schematic perspective view of a fourth embodiment of the invention, and
- Figure 13: is a schematic cross-section of the fourth embodiment of the invention.

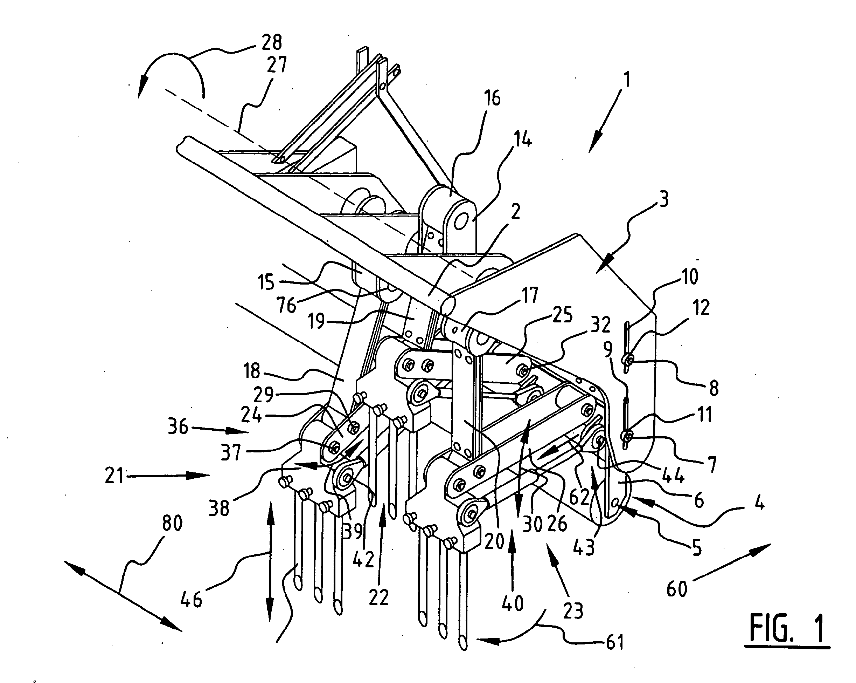

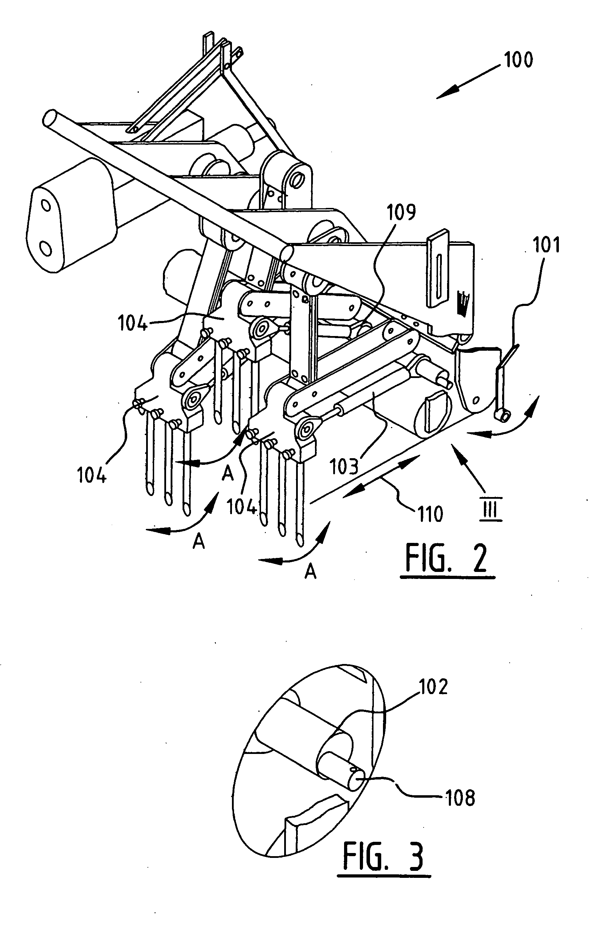

Figure 1 is a schematic perspective view of an aerating device showing the main components of the device according to the invention. The invention is however shown in detail in figures 2-13. Aerating device 1 comprises a frame 2. The frame has a side wall 3, one of which is shown. Device 1 is pulled by for instance a tractor (not shown) which pulls the aerating device over a ground surface. In another embodiment the aerating device 1 is self-propelled.

Frame 2 is provided with a moving means 4, embodied as a roller, which is connected to the frame via a bearing 5. Bearing 5 is arranged on an arm 6, which is connected adjustably to frame 2. Arm 6 is provided with two pins 7,8 which protrude through slots 9,10 in side wall 3, wherein bolts 11,12 are arranged on the end of the pins. The pins and bolts together form a height adjustment for moving means 4. By loosening the bolts and causing the pin to protrude through the slots at a different position, the height of the aerating device above the ground can be adjusted in that the distance from roller 4 is increased.

Device 1 further comprises a crankshaft 14. Crankshaft 14 can be coupled to a drive (not shown). The coupling can be formed by means of a belt. The drive can be situated on the tractor. It can be transmitted to the releasable aerating device 1 via a coupling rod. The skilled person will be familiar with different embodiments for coupling the crankshaft to a drive.

Crankshaft 14 comprises a number of hinges 15-17 connecting an arm 18-20 to respective aerating means 21-23. Arms 18-20 are pivotally connected to the crankshaft and pivotally connected to second arm 24-26 of the aerating means. Second arm 24 has a hinge 29 connected to the fourth arm 18, which is connected via a hinge 76 to crankshaft 14 which can rotate around a shaft 27 as according to arrow 28. In another embodiment the rotation is opposite to that of arrow 28, i.e. clockwise.

Through driving of the crankshaft as according to arrow 28 second arm 24 will pivot around pivot point 31 as according to arrow 30. Pivot point 31 is a bearing which is fixedly connected to frame 2. Figure 1 shows fixed pivot point 32 of arm 25. The second arms of the aerating means are fixedly connected in each case to the frame. In another embodiment the fixed connection is absent and the connection can be movable and fixable. A locking which is fixable can be used to fix the pivot point in the situation of use.

Aerating means 21 further comprises a first arm 40. First arm 40 extends substantially parallel to second arm 26. Close to a first outer end 36 of second arm 24 pin holder 38 is connected to the aerating means by means of a hinge 37. The pin holder can pivot around hinge 37 relative to second arm 24 as according to arrow 39.

Pin holder 38 is also connected via a hinge 42 to a first outer end of first arm 40 of the aerating means. In the shown embodiment according to figure 1 a parallelogram figure is obtained since the free end 43 of first arm 40 can also pivot around pivot point 44. When crankshaft 15 rotates as according to arrow 28, both the first arm 40 and second arm 24 will pivot as according to arrow 30 and a repetitive movement is performed, wherein pins 45, which are fixedly connected to pin holder 38, will move up and downward as according to arrow 46. The pins are herein inserted into the ground each time. A constantly repetitive movement is performed, wherein the pins are inserted into the ground surface, whereby a certain degree of aeration occurs.

According to a first aspect of the invention, the pivot point 44 close to outer end 43 of first arm 40 is movable and fixable relative to frame 2, wherein the crankshaft rotates as according to arrow 28, wherein the pivot point is fixed in the situation of use.

In the situation of use aerating device 1 moves over the ground surface at a determined speed of movement as according to arrow 60. Owing to this speed of movement the pin 45, which is inserted almost vertically into the ground, cannot retain its vertical position during the continuous movement of the device over the ground as according to arrow 60, but will have to pivot to some extent as according to arrow 61. This is made possible in that first arm 40 takes a telescopic form and can be extended as according to arrow 62 in this situation of use, wherein the aerating device moves as according to arrow 60 on the one hand and the crankshaft rotates around shaft 27 as according to arrow 20 on the other. Due to the pivoting of pin 45 as according to arrow 61 the first arm 40 will extend counter to the force of a draw spring which is accommodated in arm 40 and which will want to return arm 40 to the starting position shown in figure 1.

Figure 2 shows a first embodiment of the aerating device according to the invention. For the construction of the aerating device in which the invention can be applied, reference is made to figure 1. Figure 2 shows aerating device 100 which is constructed in a manner comparable to that of figure 1.

In figure 2 the central adjusting shaft 102 is rotated by turning handle 101, which is bearing mounted on the frame. Adjusting shaft 102 is mounted eccentrically in the frame. Adjusting shaft 102 is provided with an eccentrically placed pin 108 which is for instance received in a bearing connected to the frame. Suspension point 108 lies eccentrically out of centre of adjusting shaft 102. Shock absorber 103, here the first arm which takes a telescopic form, wherein a compression spring is received in the first arm, is adjusted forward or rearward by the eccentric movement of adjusting shaft 102 in accordance with the desired setting. An upward and downward adjustment also occurs here. The adjustment follows the eccentric movement of adjusting shaft 102 relative to bearing-mounted pin 108.

The result of the adjustment is that an angular displacement A of pin holders 104 occurs. Particularly the movement of pivot point 109 of the first arm in the horizontal direction results in a change of the insertion angle A of the pin holders, and thus of the pins.

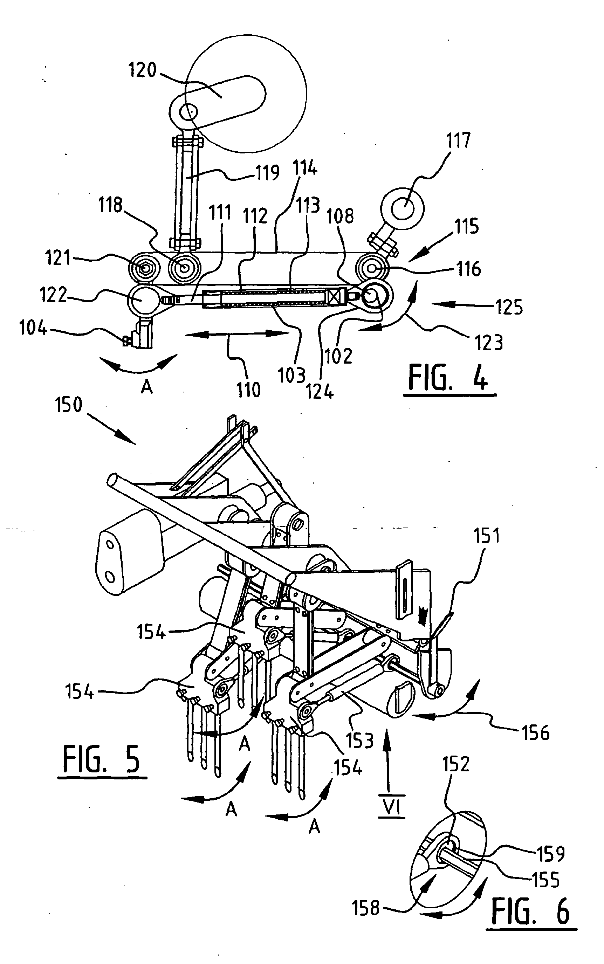

First arm 103 comprises two mutually coupled parts which can be moved apart as according to arrow 110, as shown in figure 4. The two parts 111, 112 can be moved relative to each other, herein coupled by draw spring 113.

In figure 4, which shows a cross-section of an aerating means in the aerating device, can be seen that second arm 114 is fixedly coupled close to an outer end 115 to frame 117 via a hinge 116. Second arm 114 is further coupled via a hinge 118 to fourth arm 119, which is connected to crankshaft 120. Pin holder 104 is connected by means of two hinges to the arms of the parallelogram construction of the aerating means. Pivot point 121 couples pin holder 104 to second arm 114 and hinge 122 couples pin holder 104 pivotally to first arm 103.

The cross-section also shows that the shared shaft 102 is accommodated as a bush in a continuous opening close to outer end 123 of first arm 103. The shaft runs through all eyes of the respective aerating means in the aerating device, and adjustment with handle 101 will thus result in adjustment of pivot point 124 of this first arm. Driven by crankshaft 120, the aerating means with parallelogram construction will perform a repetitive movement, herein guided by hinges 116,124 as according to arrow 125.

The bearing of pin 118 in the frame of aerating device 100 can take a very robust and over-dimensioned form, whereby the suspension has a high measure of wear-resistance. Both ends of the shaft can be bearing mounted on the frame. Handle 101 can engage on the pin 108 which protrudes through frame 1. The bearing-mounting is not shown.

Figure 5 shows a second embodiment of an aerating device 150 which has a construction comparable to that of figure 1.

Shock absorber 153 is constructed as according to the first embodiment. A profiled shaft 155, shown in detail in figure 6 as according to arrow VI in figure 5, is bearing mounted on the frame. An outer end of profiled shaft 155 is engaged by handle 151, which is placed on an outer side of the aerating device. Turning of handle 151 as according to arrow 156 results in rotation of profiled shaft 155.

Profiled shaft 155 has a hexagonal cross-section. Other non-round cross-sections can likewise be used.

Close to outer end 158 shock absorber 153 has an eye 159 in which an eccentric disc 152 is received, which acts as coupling between profiled shaft 155 and eye 159. Eccentric disc 152 is provided with an opening with non-round cross-section, the cross-section of which opening corresponds with the cross-section of profiled shaft 155.

Turning of adjusting handle 151 results in rotation of profiled shaft 155, which engages directly on bush 152, whereby outer end 158 and eye 159 are rotated eccentrically and whereby a rotation of the pivot point of first arm 153 is achieved. Since a plurality of first arms 153 of the various aerating means are connected to profiled shaft 155, the adjustment of the number of pivot points is performed in one operation.

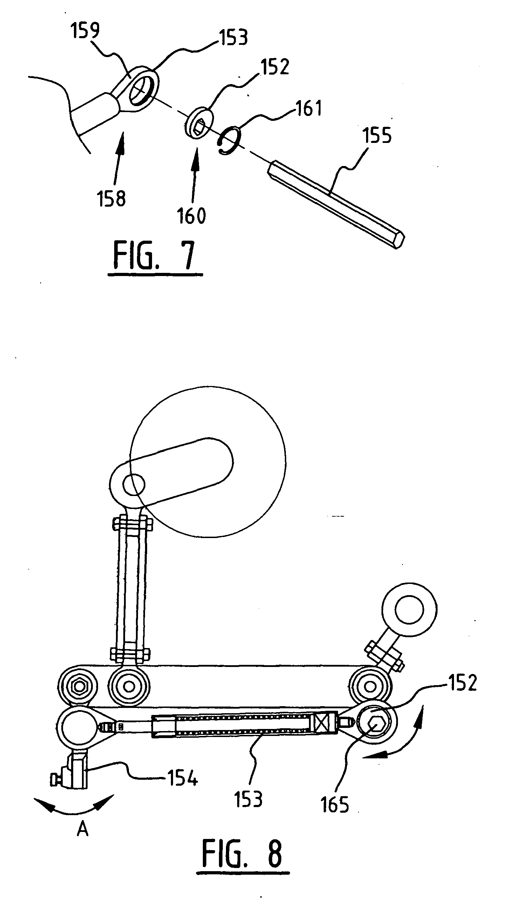

Figure 7 shows in detail the eye 159 close to outer end 158 of shock absorber 153. The bush or eccentric disc 152 has a non-round opening 160. Eccentric disc 152 is received in the eye and held in the eye, for instance by means of a ring 161. Opening 160 engages directly on the continuous profiled shaft 155.

Figure 8 shows a cross-section comparable to the first embodiment, wherein it is apparent that eccentric disc 152 can be rotated around the centre 165 of adjusting shaft 155. The adjustability of pin holder 154 according to angle A will be apparent to the skilled person. The operation of figure 8 is otherwise comparable to that of figure 4.

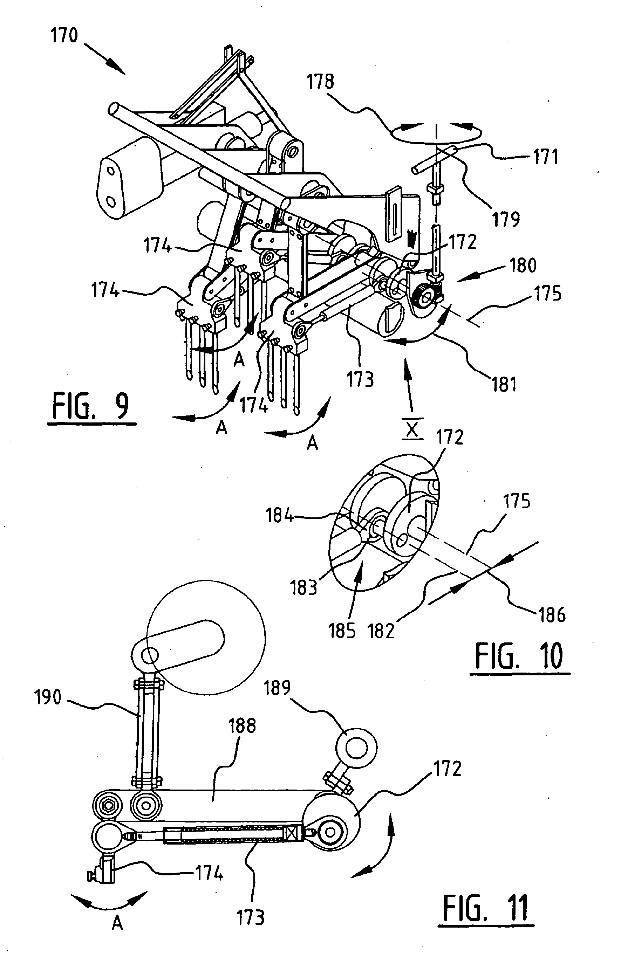

Figure 9 shows a third embodiment. Spindle 171 can be rotated around a shaft 179 as according to arrow 178, wherein shaft 175 is rotated as according to arrow 181 via a transmission mechanism 180. Shaft 175 is shown as an axis. Shaft 175 connects the various shock absorbers 173 of the aerating means of aerating device 170 according to the third embodiment. Shaft 175 is embodied similarly to a crankshaft. Figure 10 shows that shaft 182 of bush 183, which is received in eye 184 close to outer end 185 of shock absorber 173, lies a distance 186 eccentrically from shaft 175.

By rotating spindle 171 as according to arrow 178 crankshaft 172 is rotated about its centre 175. Because shock absorbers 173 are mounted eccentrically on crankshaft 172 by means of a crank mechanism, pivot point 182 of the shock absorber will be displaced in accordance with the setting that is desired. The new position can be fixed with the adjusting mechanism formed by spindle and transmission 180. Pin holder 174 rotates at an angle A through the displacement of shock absorber 173. Because each pin holder 174 is connected to a first arm 173, which is connected to crankshaft 2, the angular displacement of pin holders 174 will be centrally adjusted when spindle 171 is adjusted.

Figure 11 shows a cross-section which is comparable to the first and second embodiment, whereby particular reference is made to figure 4 for the operation. It will be apparent that second arm 188 is fixedly connected to frame 189 and is connected via a fourth arm 190 to the crankshaft for driving purposes.

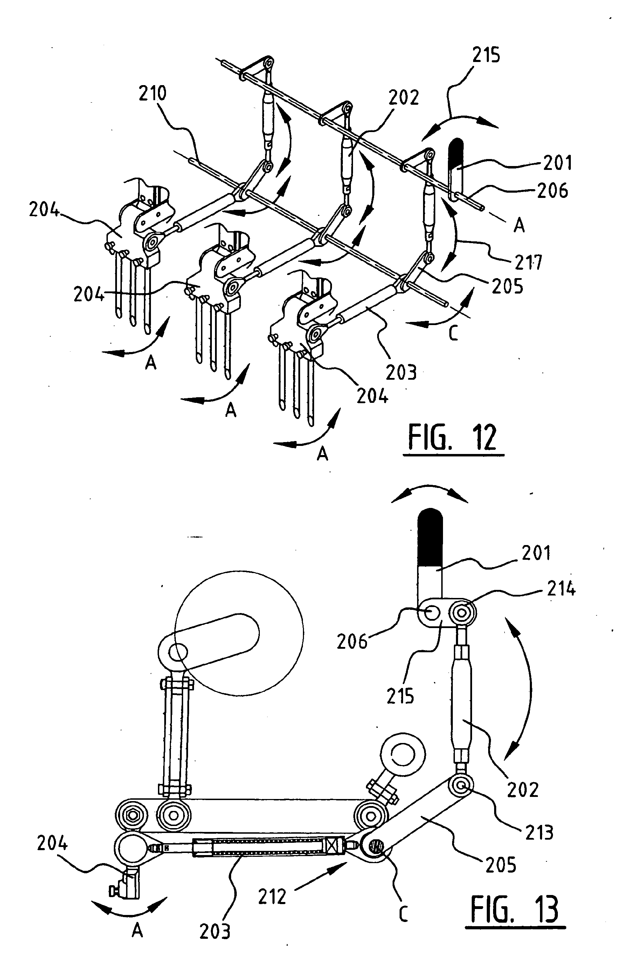

Figures 12 and 13 show a fourth embodiment. Connected to the frame (not shown) is a shaft 210, in this case with a round cross-section. Shaft 210 is the shared shaft of different aerating means, which are only shown schematically. Shock absorber 203 of an aerating means is coupled eccentrically to the shared shaft 210 by means of a bearing. Outer end 212 is provided with a bush with an eccentric opening in which shaft 210 is received. The bush is rigidly connected to an eccentric lever 205. Eccentric lever 205 is connected to a spindle 202 which can be extended or shortened. The connection is connected by a hinge 213. Spindle 202 is connected with a hinge 214 to an arm 215 which is fixedly connected to a shaft 206, which is bearing-mounted on the frame. Shaft 206 is coupled to a handle 201, which can be grasped by the user and turned as according to arrow 215. A rotation of shaft 206 as according to arrow 215 using handle 201 results in a movement of the respective spindles 202 as according to arrow 217 and a rotation of eccentric lever 205 around centre C of shared shaft 210. Because the eccentric bush is connected eccentrically to shaft 210 in the eye close to outer end 212 of shock absorber 203, an eccentric movement of the pivot point around shaft 210 will be caused here, thereby obtaining the angular adjustment of pin holder 204 through an angle A which is comparable to previous embodiments. It will be apparent to the skilled person that a central angular adjustment can be obtained with handle 201, while spindles 202 of the respective aerating means enable individual setting of the aerating means. This option results in the possible adjustment of spindle 202 for the purpose of individual compensation of the pin holders. This may be necessary due to internal wear of the system.

## Claims

1. Aerating device for aerating a ground, comprising a frame (2) provided with moving means (4) for travel of the device over a ground surface, a crankshaft (14) which is bearing-mounted on the frame (2) and which can be coupled to a drive, a number of aerating means (21-23) connected to the frame (2) and connected to the crankshaft (14), wherein the aerating means (21-23) comprise at least one pin (45) which is adapted to perform a repetitive movement in a situation of use, wherein the pin (45) is inserted into the ground, wherein the movement is guided by at least two pivoting arms (40, 24-26) of the aerating means (21-23) and wherein a number of first arms (40) of the aerating means (21-23) have a pivot point (44) which is displaceable and fixable relative to the frame (2), and wherein the pivot points (44) of a number of first arms (40) are coupled via a bush to a shared shaft (102), which is connected to the frame (2), **characterized in that** this shared shaft (102) has at least one eccentric coupling wherein the possible positions of the pivot points with respect to the shared shaft (102) lie on a circle around said shaft (102).

2. Device as claimed in claim 1, wherein the shaft (102) is rotatable relative to the frame (2).

3. Device as claimed in claim 1 or 2, **characterized in that** the shared shaft (102) is coupled eccentrically to the frame (2).

4. Device as claimed in claim 1 or 2, wherein the bush of the first arms (40) is coupled eccentrically to the shaft (102).

5. Device as claimed in claim 1, wherein the bush is a disc (152) with an eccentric opening (160), wherein the disc can be received in the eye (159) of the first arm (40).

6. Device as claimed in claim 5, wherein the eccentric opening (160) has a non-round cross-section and the shared shaft (155) has a corresponding non-round cross-section.

7. Device as claimed in any of the claims 1-6, wherein the shared shaft (102) is coupled to the bushes via a crank mechanism (172).

8. Device as claimed in claim 1 or 2, wherein the shaft (210) is coupled eccentrically to a bush of the first arm (203) and an eccentric lever (205), wherein each eccentric lever (205) of each respective aerating means is coupled via a transmission to a shared rotatable shaft (206).

9. Device as claimed in claim 8, wherein the transmission comprises a spindle (202).

## Patentansprüche

1. Belüftungseinrichtung zum Belüften eines Bodens, umfassend einen Rahmen (2), der Fortbewegungsmittel (4) zur Bewegung der Einrichtung über eine Bodenoberfläche aufweist, eine Kurbelwelle (14), die in Lagern an dem Rahmen (2) gelagert ist und die mit einem Antrieb gekoppelt werden kann, eine Anzahl von Belüftungsmitteln (21 - 23), die mit dem Rahmen (2) verbunden sind und die mit der Kurbelwelle (14) verbunden sind, wobei die Belüftungsmittel (21 - 23) zumindest eine Nadel (45) umfassen, die dafür ausgelegt ist, eine sich wiederholende Bewegung in einer Einsatzsituation auszuführen, wobei die Nadel (45) in den Boden eingeführt wird, wobei die Bewegung durch mindestens zwei Schwenkarme (40, 24 - 26) der Belüftungsmittel (21 - 23) geführt wird und wobei eine Anzahl erster Arme (40) der Belüftungsmittel (21 - 23) einen Schwenkpunkt (44) aufweisen, der in Bezug auf den Rahmen (2) verschiebbar und feststellbar ist, und wobei die Schwenkpunkte (44) einer Reihe von ersten Armen (40) über eine Buchse mit einer gemeinsamen Welle (102) gekoppelt sind, welche mit dem Rahmen (2) verbunden ist, **dadurch gekennzeichnet, dass** diese gemeinsame Welle (102) zumindest eine exzentrische Kupplung aufweist, wobei die möglichen Positionen der Schwenkpunkte in Bezug auf die gemeinsame Welle (102) auf einem Kreis um die Welle (102) herum liegen.

2. Einrichtung nach Anspruch 1, wobei die Welle (102) in Bezug auf den Rahmen (2) drehbar ist.

3. Einrichtung nach Anspruch 1 oder 2, **dadurch gekennzeichnet, dass** die gemeinsame Welle (102) exzentrisch mit dem Rahmen (2) gekoppelt ist.

4. Einrichtung nach Anspruch 1 oder 2, wobei die Buchse der ersten Arme (40) exzentrisch mit der Welle (102) gekoppelt ist.

5. Einrichtung nach Anspruch 1, wobei die Buchse eine Scheibe (152) mit einer exzentrischen Öffnung (160) ist, wobei die Scheibe in dem Auge (159) des ersten Arms (40) aufgenommen werden kann.

6. Einrichtung nach Anspruch 5, wobei die exzentrische Öffnung (160) einen nicht-runden Querschnitt aufweist und die gemeinsame Welle (155) einen entsprechenden nicht-runden Querschnitt aufweist.

7. Einrichtung nach einem der Ansprüche 1 bis 6, wobei die gemeinsame Welle (102) mit den Buchsen über ein Kurbelgetriebe (172) gekoppelt ist.

8. Einrichtung nach Anspruch 1 oder 2, wobei die Welle (210) exzentrisch mit einer Buchse des ersten Arms (203) und mit einem Exzenterhebel (205) gekoppelt ist, wobei jeder Exzenterhebel (205) aller jeweiligen Belüftungsmittel über ein Getriebe mit einer gemeinsamen drehbaren Welle (206) gekoppelt ist.

9. Einrichtung nach Anspruch 8, wobei das Getriebe eine Spindel (202) umfasst.

## Revendications

1. Dispositif d'aération pour aérer un sol, comprenant une structure (2) dotée de moyens de déplacement (4) pour le déplacement du dispositif sur une surface du sol, un vilebrequin (14) monté sur palier sur la structure (2) et pouvant être couplé à une transmission, plusieurs moyens d'aération (21 à 23) reliés à la structure (2) et reliés au vilebrequin (14), dans lequel les moyens d'aération (21 à 23) comprennent au moins un axe (45) adapté pour réaliser un mouvement répétitif dans une situation d'utilisation, dans lequel l'axe (45) est inséré dans le sol, dans lequel le mouvement est guidé par au moins deux bras pivotants (40, 24 à 26) des moyens d'aération (21 à 23) et dans lequel plusieurs premiers bras (40) des moyens d'aération (21 à 23) ont un point d'articulation (44) pouvant être déplacé et fixé par rapport à la structure (2), et dans lequel les points d'articulation (44) de plusieurs premiers bras (40) sont couplés par l'intermédiaire d'une douille à un arbre partagé (102) relié à la structure (2), **caractérisé en ce que** cet arbre partagé (102) a au moins un couplage excentrique dans lequel les positions possibles des points d'articulation par rapport à l'arbre partagé (102) reposent sur un cercle autour dudit arbre (102).

2. Dispositif selon la revendication 1, dans lequel l'arbre (102) est rotatif par rapport à la structure (2).

3. Dispositif selon la revendication 1 ou 2, **caractérisé en ce que** l'arbre partagé (102) est couplé de manière excentrique à la structure (2).

4. Dispositif selon la revendication 1 ou 2, dans lequel la douille des premiers bras (40) est couplée de manière excentrique à l'arbre (102).

5. Dispositif selon la revendication 1, dans lequel la douille est un disque (152) dotée d'une ouverture excentrique (160), dans laquelle le disque peut être reçu dans l'oeil (159) du premier bras (40).

6. Dispositif selon la revendication 5, dans lequel l'ouverture excentrique (160) a une section transversale non ronde et l'arbre partagé (155) a une section transversale non ronde correspondante.

7. Dispositif selon l'une quelconque des revendications 1 à 6, dans lequel l'arbre partagé (102) est couplé aux douilles par l'intermédiaire d'un mécanisme de manivelle (172).

8. Dispositif selon la revendication 1 ou 2, dans lequel l'arbre (210) est couplé de manière excentrique à une douille du premier bras (203) et un levier excentrique (205), dans lequel chaque levier excentrique (205) de chaque moyen d'aération respectif est couplé par l'intermédiaire d'une transmission à un arbre rotatif (206) partagé.

9. Dispositif selon la revendication 8, dans lequel la transmission comprend une bielle (202).
